# EUROPEAN PATENT SPECIFICATION

(11) **EP 2 106 073 B1**
(45) Date of publication and mention of the grant of the patent: **11.08.2010**
(21) Application number: 08103140.3
(22) Date of filing: 28.03.2008
(51) Int. Cl.: H04L 12/56

(54) **Method and apparatus for increasing throughput in a communication network**
Verfahren und Vorrichtung zur Erhöhung des Datendurchsatzes in einem Kommunikationsnetzwerk
Procédé et appareil pour augmenter le débit dans un réseau de communication

(43) Date of publication of application: 30.09.2009
(73) Proprietor: NTT DoCoMo, Inc., Tokyo (JP)
(72) Inventor: Loyola, Luis, 80539, Munich (DE); Widmer, Joerg, 81539, Munich (DE)
(74) Representative: Betten & Resch

(56) References cited:
- US-A1- 2006 146 716
- SENGUPTA S ET AL: "An Analysis of Wireless Network Coding for Unicast Sessions: The Case for Coding-Aware Routing" INFOCOM 2007. 26TH IEEE INTERNATIONAL CONFERENCE ON COMPUTER COMMUNICA TIONS. IEEE, IEEE, PI, 1 May 2007 (2007-05-01), pages 1028-1036, XP031093660 ISBN: 978-1-4244-1047-7
- SACHIN KATTI ET AL: "The Importance of Being Opportunistic: Practical Network Coding for Wireless Environments" INTERNET CITATION, [Online] XP003016298 Retrieved from the Internet: URL:http://www.cl.cam.ac.uk/~wh214/researc h/papers/allerton05.pdf> [retrieved on 2007-01-01]

## Description

### FIELD OF INVENTION

The present invention relates to a method and an apparatus for increasing throughput in a communication network through network coding

### BACKGROUND OF THE INVENTION

More efficient use of the bandwidth resources is a key issue in today's telecommunications networks. During recent years a technique named *network coding* has attracted a lot of attention in the research field due to its significant improvements of network capacity based on linear combinations of packets. Additionally its usefulness as a free and easy-to-implement cipher has also been highlighted in L. Lima, M. Medard, J.Barros, "Random Linear Coding: A Free Cypher?", IEEE International Symposium in Information Theory 2007, 24th - 29th June 2007, Nice, France.

Most of the studies on network coding have focused so far on theoretical analysis and the application of network coding in multicast scenarios for file sharing over wired networks. The studies on the application of network coding in wireless networks have mainly concentrated on sensor networks - due to its inherent broadcast or multicast nature- and in a smaller scale on multicast data distribution in WLAN environments. Only few studies have focused on the practical use of network coding in routing over a multi-hop wireless network. Two of the proposed mechanisms, COPE (see S.Katti, H.Rahul, W.Hu, D.Katabi, M.Medard and J.Crowcroft, "XoRs in the air: Practical Network Coding", SIGCOMM'06, September 11-15, 2006, Pisa, Italy) and MORE (see S.Chachulski, M.Jennings, S.Katti and D.Katabi, "Trading Structure for Randomness in Wireless Opportunistic Routing", SIGCOMM'07, August 27-31, 2007, Kyoto, Japan) will now be briefly explained in the following.

The mechanism called COPE performs a smart and opportunistic combination of packets for unicast flows in a multi-hop 802.11 network but in a very local way, i.e. without taking into account routes or addresses of destination nodes. The algorithm for packet coding in COPE is completely opportunistic and takes into account the delivery probability between every pair of nodes in order to identify good paths. As a result of the efficient and opportunistic packet combination the throughput is increased up to 3 or 4 times in an ad-hoc network testbed with 20 nodes as described in the COPE paper. The COPE algorithm, however, can not be considered as a routing algorithm since it does not modify the path entries in the routing table of every node but only takes the existing unicast paths defined by the underlying routing algorithm (e.g., AODV or OLSR) and a packet delivery probability estimator such as the Expected Transmission Count (ETX) (see e.g. D. de Couto, D. Aguayo, J.Bicket and R. Morris, "A HighThroughput Path Metric for MultiHop Wireless Routing", MOBICOM'03, September 14-19, 2003, San Diego, California, USA) and try to make the best combinations of packets it can.

The mechanism called MORE defines a network coding approach to opportunistic routing. Routers make linear combination of packets going to the same destination together and forward these coded versions. The destination decodes and recovers the original packets. In MORE the source sends batches of K packets, where K may vary from one batch to another. Each MORE packet contains the code vector that describes its contents with respect to native packets, the batch sequence number, the distance of the transmitter from the destination, and a type field that identifies data packets from ACKs. Nodes in the middle listen to all transmissions. When a node hears a packet, it checks whether the packet is innovative, i.e. linearly independent from the ones it has previously received from this batch. If the packet is not innovative, it can be immediately discarded. Next, the node checks whether it is closer to the destination than the previous hop of the overheard packet. If it is, then the arrival of this new packet triggers the node to broadcast a linear combination of packets from the same batch as the recently received packet. Finally, the destination node checks whether each packet it receives is innovative, and discards non-innovative packets. Once the destination receives enough innovative packets to decode the batch, it sends an acknowledgement along the shortest path toward the source. A major advantage of MORE is that there is no need for coordination among nodes. However nodes along the path are not allowed to use autorate selection but only a single bit-rate value, which is clearly inefficient from a MAC layer perspective. Furthermore, a considerable amount of unnecessary traffic may be generated by forwarders who do not hear the acknowledgement packet sent by the destination along the shortest path, and further packet collisions may occur before the transmission of the acknowledgement.

Similar solutions disclose also the following documents: US 2006/0146716 A1 (LUN DESMOND S [US] ET AL); and the paper entitled "An Analysis of Wireless Network Coding for Unicast Sessions: The Case for Coding-Aware Routing" by Sengupta S et al (INFOCOM 2007. 26TH IEEE INTERNATIONAL CONFERENCE ON COMPUTER COMMUNICA TIONS. IEEE, IEEE, PI, 1 May 2007 (2007-05-01), pages 1028-1036, XP031093660 ISBN: 978-1-4244-1047-7).

### SUMMARY OF THE INVENTION

According to one embodiment there is provided a method for increasing throughput in a communication network through network coding as defined in claim 1.

With this approach different paths can me merged into a single bi-directional trunk which can increase the total throughput by employing network coding which makes more efficient use of the shared medium.

In this way the mechanism can be easily integrated into existing routing protocols by using the network coding gain as an additional parameter in the routing metrics. The routing metrics in one embodiment may further be based on the link quality between the nodes in addition to the network coding gain, and the resulting metrics can then be used by the routing algorithm for determining the route.

Furthermore, in this way the individual nodes of the network can contribute to distribute the necessary information which enables a possible coding node to determine whether it is able to offer a new route over which network coding can be employed.

Moreover, in this way the local area in the n-hop neighborhood of a possible coding node can decide whether a new route should be chosen, and if so, can update the route accordingly.

According to one embodiment the method further comprises:
said step of determining an alternative bi-directional path comprises running a source-routing mechanism to discover one or more paths between the two disconnected nodes or sets of nodes;
choose one or more paths detected by said source-routing mechanism to perform network coding by nodes of said paths.

In this way there can be implemented a mechanism which is not local but which extends over a n-hop neighborhood with n being large. This is achieved by selecting the path along which network coding can be employed in an end-to-end manner by source routing between the disconnected nodes or set of nodes.

According to one embodiment the method further comprises:
balancing the data rate flowing into opposite directions along the same path.

The balancing of the data rates enables a particularly efficient usage of the network coding.

According to one embodiment the method further comprises:
splitting a data file to be exchanged between said nodes or sets of nodes into several pieces and sending it across multiple paths.

This enhances security and makes eavesdropping more difficult.

According to one embodiment there is provided an apparatus for increasing throughput in a communication network through network coding as defined in claim 6.
In this way an apparatus for achieving the throughput increase can be implemented.

According to one embodiment there is provided a computer program comprising computer program code which when being executed on a computer enables said computer to carry out a method according to one of the embodiments of the invention.

### DESCRIPTION OF THE DRAWINGS

Figures 1A to 1D illustrate examples of situations where the method according to an embodiment of the invention may be employed.
Fig. 2 shows a flowchart schematically illustrating a method according to an embodiment of the invention.
Fig. 3 schematically illustrates a further example of a situation where the method according to an embodiment of the invention may be employed.
Fig. 4 schematically illustrates further example of a situation where a method according to a further embodiment of the invention may be employed.

### DETAILED DESCRIPTION

At first some terms which will be used in the following description are explained.
- DSR: : Dynamic Source Routing
- ETX: : Expected Transmission Count
- R: : exclusive OR operation
- ACK: : Acknowledgement
- MAC: : Medium Access Control
- AODV: : Ad-hoc On-demand Distance Vector
- OLSR: : Optimized Link State Routing
- COPE: : Cooperative Routing
- MORE: : MAC-independent Routing

According to embodiments of the invention there are provided mechanisms to optimize routing topologies to improve network coding opportunities. This can be done in a local and in an end-to-end manner. According to embodiments of the invention the following two approaches can be used:
1) By modifying unicast paths in the routing tables of a certain node neighborhood, while taking advantage of network coding opportunities in the network whenever they appear. The proposed technique creates packet-combining *coding* nodes, which absorb packets flowing in their surroundings and opportunistically combining them in order to increase the overall throughput of the network.
2) A mechanism in which two or more set of nodes connected via a number of intermediate nodes in a multi-hop manner in the topology exchange traffic through a previously defined and agreed set of paths along which network coding can be used.

The former algorithm is local and decentralized while the latter works end to end and requires end-to-end routing control (e.g., in the form of source routing). However, the second approach requires neighborhood knowledge at all the nodes along the path, whereas the first one only requires this knowledge within the respective sets of nodes (an n-hop neighborhood of a possible coding node, n being small, for example n=2). The second approach may be regarded as a "generalization" of the first approach for the case where neighborhood knowledge is available not only for some nodes surrounding a certain node but for all nodes of the network (a large n).

The mechanism according to an embodiment of the invention merges different paths of packets flowing in opposite directions into a single bidirectional trunk to increase the total throughput of the network by making a more efficient use of the shared medium. According to one embodiment it can easily be integrated into existing routing algorithms such as AODV or OLSR, e.g. by modifying the underlying routing metrics. This results then in a completely localized mechanism. Alternatively, according to one embodiment decisions on route modifications can be taken in an end-to-end manner, by modifying or adapting the path selection mechanism of a source routing protocol.

The latter brings two further advantages on the top of the advantages mentioned above:
- Different paths for an exchange of information between different sets of nodes may be used for load balancing
- Different paths for exchange of data between different pair of nodes may be
   used to improve the security of the data transmitted along these paths

Embodiments of the invention will now be described in somewhat more detail.

According to one embodiment there are created packet-combining *coding* nodes, which attract all packets flowing in their surrounding and opportunistically combining them in order to increase the overall throughput of the network.

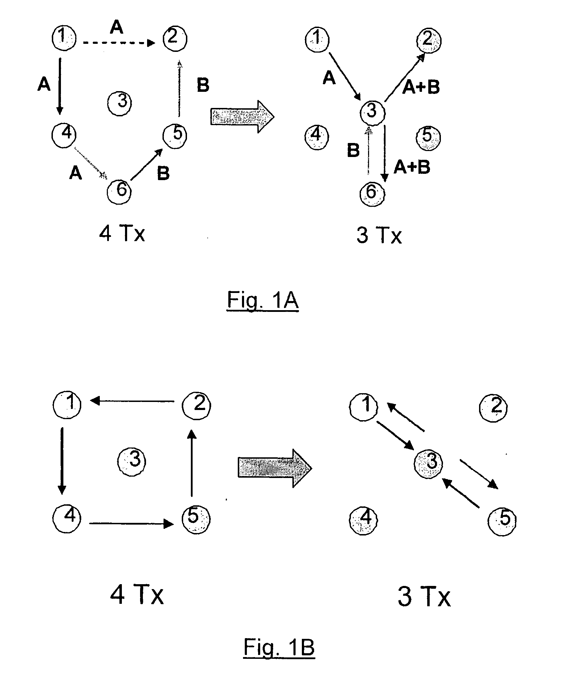

Several examples of the operation of this mechanism is schematically illustrated in Figures 1A to 1D. Figures 1A to 1D show how to change the routes to provide coding opportunities and thus to reduce the number of transmissions, i.e., increase the throughput of the system.

In Figure 1A node 1 is transmitting a packet to node 6 while node 6 is transmitting packets to node 2. Node 2 can overhear the transmissions by node 1 since it is in its transmission range. Thus node 3 can combine packets coming from node 1 and node 6 in order to save transmissions.

In Figure 1B node 1 and node 5 are exchanging packets through node 4 and node 2. However, the number of transmissions required to perform this exchange of packets can be reduced if node 3 takes advantange of its privileged location and makes linear combinations of the packets coming from node 1 and node 5.

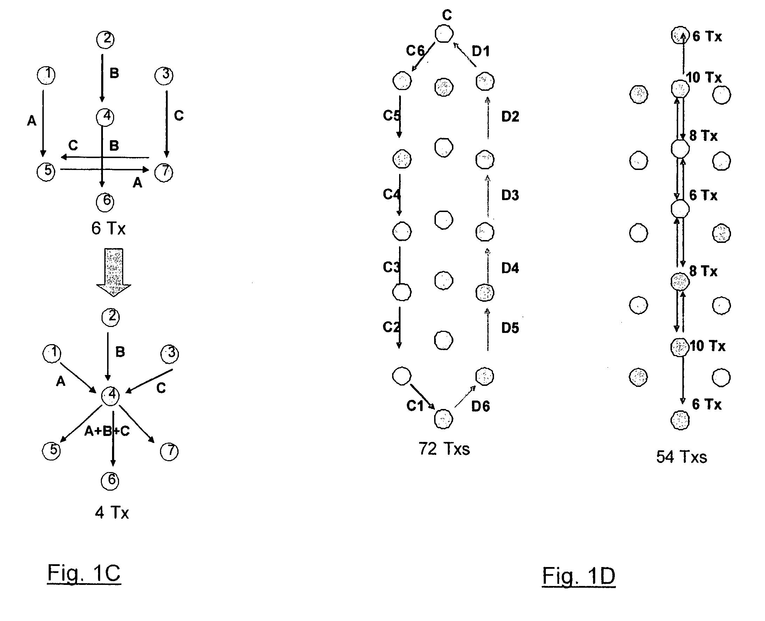

In figure 1C node 5 can overhear node 1 and node 2, node 6 can overhear node 1 and node 3, node 7 can overhear node 2 and node 3, while node 4 can overhear all other nodes. Assuming that node 1, node 2 and node 3 transmit packets A, B and C in 3 consecutive time slots, at the end of the third time slot node 4 has buffered A, B and C. After this node 4 needs to transmit only once in a fourth time slot for all nodes to decode the packet they are expecting. Node 4 can do this because it is aware of the link-state of its 2-hop neighborhood (i.e. it knows how well can nodes hear each other) and also knows the active paths in its neighborhood (i.e. who is sending packets to whom). Therefore, node 4 is able to offer a set of 3 unidirectional paths at the cost of a single transmission over 3 coded packets as shown in figure 1C.

Figure 1D shows a relatively simple example of two separate flows going in opposite directions across paths very close to each other in the network topology. If all nodes in the path located at the middle of both routes start making linear combinations of packets flowing in opposite directions, the total number of transmissions can be considerably reduced. In figure 1D one may assume that the node in the top is transmitting a trail of packets {C1, C2, C3, C4, C5 and C6} to the node in the bottom, while the node at the bottom is conversely transmitting a trail of packets {D1, D2, D3, D4, D5 and D6} to the node at the top. In the first time slot both the node at the top and the node at the bottom transmit C1 and D1, respectively. In the second time slot, the node second to the top and the node second to the bottom relay C1 and D1, respectively, while the node at the top and the node at the bottom transmit C2 and D2, respectively. The packet transmissions continue on that way without performing any packet linear combination until the fourth time slot in which the node in the middle transmits a linear combination of packets C1 and D1, denoted as *L(C1,D1)* flowing in opposite directions. In the fifth time slot the node in the middle transmits *L(C2, D2)* while its neighbor node above transmits *L(C3,D1)* and its neighbor below transmits *L(CI,D3).* Similarly, in the next slot the middle node transmits *L(C3, D3)* while its neighbors transmit *L(C4,D2)* and *L(C2,D4)*, respectively. The flow of packets continues in the same way until both nodes at the bottom and at the top have received their 6 expected packets from the node at the other extreme of the network. Finally there are a total of 54 transmissions which represents a 25% reduction with respect to the original 72 transmissions. The number of transmissions performed by each node is shown in figure 1D.

One question is how to select the ideal packet-combining coding nodes, preferably while reducing the information that neighboring nodes must exchange. The explicit or dedicated exchange of messages with such information can be completely avoided if one incorporates into the routing metrics a measure or assessment of the capability of a particular node to become a *coding* node. The routing metrics then is based on a parameter which reflects a potential throughput gain which can be achieved by network coding, and based on this routing metrics the underlying routing algorithm can without further changes choose a route accordingly taking into account possible gains achieved by network coding.

Alternatively, the self-selected coding node can explicitly offer its relay service to particular nodes located in its vicinity in order to increase the total throughput by means of network coding.

The self-selection as a *coding* node according to one embodiment relies on two main pieces of information: 1) the next-hop address (not the final destination) of packets transmitted by neighboring nodes, and 2) the quality of the inter-node links in the n-hop vicinity of each node. The information about the next-hop of every packet sent in the surrounding area can be easily extracted by overhearing the destination address field in the MAC packet header. The information about the inter-node links in the vicinity according to one embodiment is gathered by having every node calculate the ETX - or a similar routing metric for wireless multi-hop networks - to each of its neighbors and include in selected packets' headers the current, complete list of (*n*-1) hop neighbors and their associated links' ETX values. In one specific embodiment a choice for n is 2, but other choices are possible as well. By doing this, every node in the network has fresh information about the surrounding topology in its vicinity within a range of n hops. This procedure allows all nodes to create a link state map of the n-hop-radius surrounding topology and to select or discard themselves as good candidates for becoming packet-combining coding nodes upon detecting the surrounding conditions. The self-selection of the coding nodes directly affects the routes only within the n-hop neighborhood but the continuous computation of *coding* node self-selection in a chain of neighboring nodes may end up also altering multi-hop paths as shown in figure 1D.

According to one embodiment every node in the system periodically broadcasts the list of its (n-1)-hop neighbors and ETX measurements (or any other indication of the inter-node quality link)) of their respective links {neighbor, ETX}. In practice, according to one embodiment a small value of n, e.g., n=2, may be chosen to limit the overhead for the exchange of ETX information.

In general, for any node A to select itself as a *coding* node according to one embodiment the following two conditions must be simultaneously detected:
1) Two disconnected nodes or sets of nodes (no node can directly communicate with a node in the other domain) in the n-hop-radius neighborhood, are exchanging packets through two or more different routes in the topology that may or may not cross node A
2) Node A has an alternative "good-quality bi-directional path or multiple unidirectional paths" - according to a specific routing metric- between the involved communicating regions over which node A can make linear combinations of the packets flowing in opposite directions that are being exchanged by the disconnected regions (the disconnected nodes or sets of nodes).

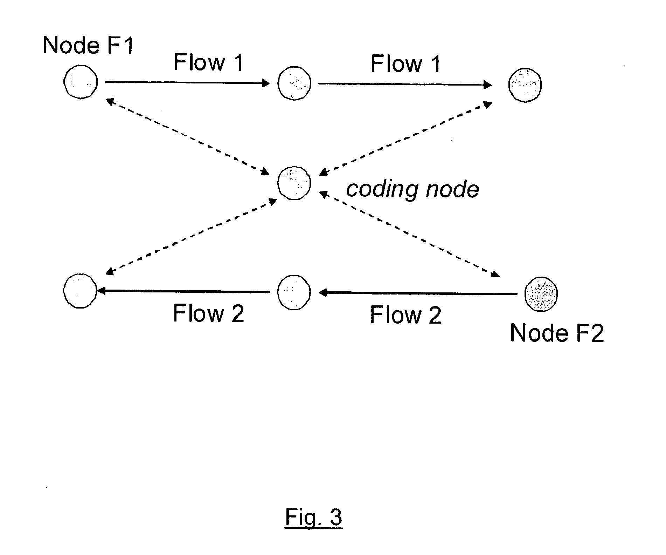

There can either be used an alternative bi-directional path or multiple unidirectional paths. For example, in Fig. 3, the link from F2 the middle can be unidirectional, just like the link from F1 to the middle, they do not need to hear the middle node. Also, the receivers don't need to be able to send to the middle node.

According to one embodiment a node that meets the two conditions stated previously offers new bi-directional paths to the nodes that are part of the original routes in the n-hop neighborhood. These nodes accept or decline the offer. In case the nodes accept the offer, the coding node or nodes send a confirmation to all of them. Upon receiving the confirmation the nodes start to send their packets to the combining node(s).

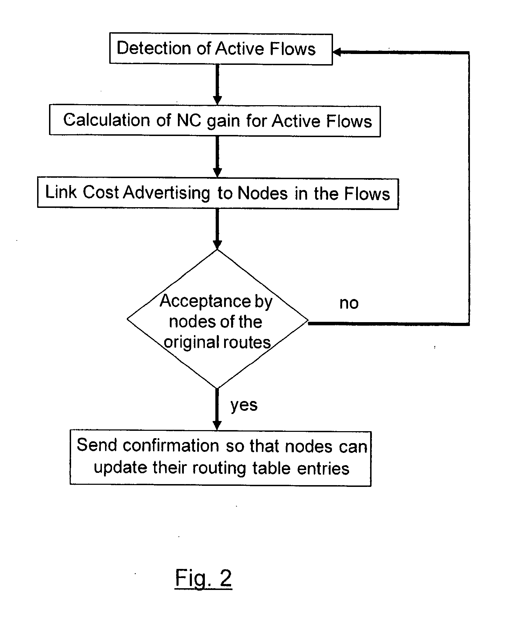

Figure 2 shows a pseudo-algorithm for such a mechanism. First the active flows (or routes) are detected and the network coding gain then is determined for the case that network coding would be applied. The resulting link cost is advertised to the nodes taking part in the flows, and then the new route is accepted (or not) by these nodes. Then, after acceptance, a confirmation is sent so that the nodes can update their routing table entries.

Figure 3 shows a general example in which a potential coding node detects two active data streams flowing in opposite directions within its 2-hop neighborhood. In this case the coding node follows the pseudo algorithm given by Figure 2, advertising Node F1 and Node F2 a lower link cost that takes into account NC gains. The link cost (which can e.g. be the ETX value) used by the routing algorithm beneath could be modified by a factor that shows the NC gain in the following way:
*Link_Cost* = *NC_Gain*·*ETX*
where NC_Gain should mainly reflect the throughput gains (e.g. 1/2 or 3/4). In this way there is generated a routing metrics which reflects a possible throughput gain achieved by network coding. In case all involved nodes agree to a change of their routes, they send feedback to the coding node. The coding node then sends a confirmation and the corresponding routing table entries are modified.

Now once again reference is made to the illustrative examples shown in Figures 1A to 1D. In Figure 1A node 3 selects itself as a *coding* node after detecting that a node in its communication range (node 6) is both transmitting and receiving from a pair of nodes located also within its communication range. After selecting itself as a coding node, Node 3 announces a routing cost lower than nodes 4 and 5 to serve as a relay for nodes 1 and 6 to reach Node 6 and Node 2, respectively. Alternatively, Node 3 could also offer nodes 1 and 6 to become their relay to reach nodes 6 and 2, respectively. If the offer is accepted by both Node 6 and Node 2, then Node 3 instructs Node 2 to activate an overhearing mechanism so that it can overhear the packets transmitted by node 1. Node 3 is aware that Node 1 and Node 2 are in communication range due to the broadcasting of neighbor link's ETX measurements.

In Figure 1B Node 3 detects that Node 1 and Node 5 are exchanging packets and offers to both of them to serve as a relay instead of Node 4 and Node 2, respectively.

In Figure 1C Node 4 detects that Node 1, Node 2 and Node 3 are sending data to Node 7. Node 6 and Node 5, respectively. Node 4 observes that Node 6 and Node 5 can overhear Node 1 transmission, Node 5 and Node 7 can overhear Node 2 transmission, and that Node 6 and Node 7 can overhear Node 3 transmission. Since the receive terminals can overhear the other source nodes but its own source, Node 4 offers to Node 1, Node 2 and Node 3 to serve as a relay to reach their corresponding destination nodes.

In Figure 1d) Node C and Node D are exchanging multiple packets through two different paths. Nodes in the middle of the two paths realize they are able to offer a "good" bi-directional path (in terms of ETX) for combining packets flowing in opposite directions, thus increasing considerably the network throughput.

The mechanisms described so far are operating on a local level, i.e. within the n-hop neighborhood of a possible coding node with n being a small integer, e.g. n=2. It may, however, also extended to a range of a larger n.

Now examples of such mechanisms will be described These mechanisms can be considered an extension of the example discussed in Figure 1D. It deals with the set-up of multi-hop paths over which packets flowing in opposite directions can be linearly combined. The following embodiments are based on such end-to-end mechanisms

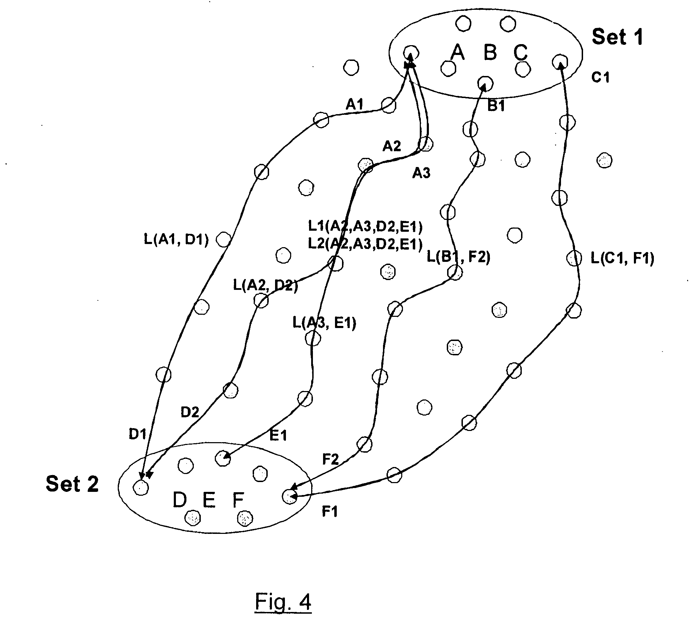

According to one embodiment two topologically disconnected sets of neighboring nodes exchanging data traffic can agree on a specific set of source-routing paths along which network coding can be applied on the bi-directional traffic -by making linear combinations of packet flowing in opposite directions. To obtain a better throughput gain the unidirectional packet sizes and data rates can be homogenized in both directions along the common sections of the paths. Thus, for example as shown in Figure 4, two sets of disconnected nodes are exchanging packets through multiple paths over which packets are coded. It may be assumed that within a set of nodes there exist replicas of all exchanged packets in every node. For the mechanism for disseminating the replicas inside a set it can be assumed that nodes inside a set are also interconnected through a fast and secure connection via e.g. a wired Ethernet network or a high speed wireless network.

According to one embodiment the mechanism works according to the general rules shown below:
1) Either set 1 or set 2 detects that there is an exchange of packets between the two set of nodes by obtaining information about active flows within the set
2) Sets 1 and 2 gather and exchange information about the average data rate of packets flowing in and flowing out, which are being exchanged.
3) Sets 1 and 2 run a (preferably security-concerned) source-routing mechanism to discover the existing paths between them (preferably with good end-to-end quality and, if possible, verified trustable nodes)
4) Out of the list of paths found in step 3) sets 1 and 2 choose a number of paths to perform the exchange of packets, trying to balance the data rate flowing in opposite directions along the same path. In general the source-routing paths should be built so as to offset the average data rates flowing in opposite directions
5) Non-real-time data files to be exchanged between both sets can be split into several pieces and sent using a source routing mechanism (e.g. *Dynamic Source Routing* (see e.g. David B. Johnson, "Routing in Ad Hoc Networks of Mobile Hosts", Proceedings of the Workshop on Mobile Computing Systems and Applications, pp. 158-163, IEEE Computer Society, Santa Cruz, CA, December 1994)) across multiple paths while real-time traffic should be in principle sent via only one path in order to observe the delay and jitter restrictions. Bi-directional paths can change dynamically but these changes must be coordinated by both sets exchanging data.

Figure 4 shows an example in which the sets of nodes 1 and 2 are exchanging 6 different files {A, B, C, D, E, F}. The algebraic operator L(*) in the figure creates linear combinations of the packets using random coefficients. Before starting the exchange of packets, sets 1 and 2 agree on a set of specific paths which are added to the header of each packet in a source-routing way. According to one embodiment the paths are decided based on end-to-end capacity and/or security considerations like which nodes are trustable and which are not.

With respect to capacity considerations, according to one embodiment all paths should be created so as to keep balance between the amounts of data traffic flowing in opposite directions. Each file could be either sent across a single path or divided into multiple parts and subsequently sent in parts via different paths as shown in Figure 4. Paths may be changed dynamically according to traffic conditions or due to security/privacy concerns. In Figure 4, fractions of files like A1 and A2 from file A or D1 and D2 from file D are linearly combined using random coefficients across the source-routing paths. When the pieces of files to be combined have different size, padding techniques may be used to make their sizes equal. The linear combination of packets according to one embodiment should be performed in an opportunistic way weighting with random coefficients and modulo-2 adding all packets waiting in the transmission buffer. According to one embodiment the linear combinations are generated immediately so that no further queuing delays are introduced if, for example, there is only one packet in the transmission buffer.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a mechanism as described in the embodiments of the invention. For example network nodes may be programmed such that they operate as the nodes described in connection with the embodiments of the invention, thereby actually implementing embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the mechanism as described before.

## Claims

1. A method for increasing throughput in a communication network through network coding, said method comprising:
detecting if packets are exchanged between two disconnected nodes or sets of nodes through two or more different routes in the n-hop-radius neighborhood of a potential coding node;
determining whether there is an alternative bi-directional path or multiple unidirectional paths over which said potential coding node can make linear combinations of the packets flowing in opposite directions that are being exchanged by said disconnected nodes or sets of nodes;
determining whether said alternative bi-directional path or multiple unidirectional paths on which network coding can be applied offer a gain according to a certain metric;
if said metric indicates a gain by applying network coding, changing routes along which packets are exchanged between said two disconnected nodes or sets of nodes such that network coding by said possible coding node can be employed;
wherein
said metric is a routing metric used by the underlying routing protocol, said routing metrics being based on the gain in transmission costs which can be achieved by network coding and further based on the link quality between the nodes; said method further comprising;
broadcasting by each node in said network information about the neighbors in its n-1 hop neighborhood and further an indication about the respective quality of the links to its n-1 hop neighbors to enable a possible coding node to create a link state map of its n-hop neighborhood topology and to select or discard itself as a candidate node for network coding based on the detected surrounding conditions;
advertising by a possible coding node an indication of the link cost for a new route which employs network coding, said link cost reflecting a possible throughput gain achieved by network coding;
determining whether the new route in terms of link cost is preferable over the different routes used so far for exchanging packets between said disconnected set of nodes;
if said new route is preferable, updating the routing table entries to adapt said new route for said packet exchange.

2. The method of claim 1, further comprising:
receiving by a possible coding node information about the topology and the active paths in its n-hop neighborhood with n being a natural number equal or greater than 2.

3. The method of one of the preceding claims, wherein
said step of determining an alternative bi-directional path comprises running a source-routing mechanism to discover one or more paths between the two disconnected nodes or sets of nodes;
choose one or more paths detected by said source-routing mechanism to perform network coding by nodes of said paths.

4. The method of claim 3, further comprising:
balancing the data rate flowing into opposite directions along the same path.

5. The method of claim 3 or 4, further comprising:
splitting a data file to be exchanged between said nodes or sets of nodes into several pieces and sending it across multiple paths.

6. An apparatus for increasing throughput in a communication network through network coding, said apparatus comprising:
means for detecting if packets are exchanged between two disconnected nodes or sets of nodes through two or more different routes in the n-hop-radius neighborhood of a potential coding node;
means for determining whether there is an alternative bi-directional path or multiple unidirectional paths over which said potential coding node can make linear combinations of the packets flowing in opposite directions that are being exchanged by said disconnected nodes or sets of nodes;
means for determining whether said alternative bi-directional path or multiple unidirectional paths on which network coding can be applied offer a gain according to a certain metric;
means for if said metric indicates a gain by applying network coding, changing routes along which packets are exchanged between said two disconnected nodes or sets of nodes such that network coding by said possible coding node can be employed;
wherein
said metric is a routing metric used by the underlying routing protocol, said routing metric being based on the gain in transmission costs which can be achieved by network coding and further based on the link quality between the nodes, said apparatus further comprising:
means for broadcasting by each node in said network information about the neighbors in its n-1 hop neighborhood and further an indication about the respective quality of the links to its n-1 hop neighbors to enable a possible coding node to create a link state map of its n-hop neighborhood topology and to select or discard itself as a candidate node for network coding based on the detected surrounding conditions;
means for advertising by a possible coding node an indication of the link cost for a new route which employs network coding, said link cost reflecting a possible throughput gain achieved by network coding;
means for determining whether the new route in terms of link cost is preferable over the different routes used so far for exchanging packets between said disconnected set of nodes;
means for, if said new route is preferable, updating the routing table entries to adapt said new route for said packet exchange.

7. The apparatus of claim 6, further comprising:
means for receiving by a possible coding node information about the topology and the active paths in its n-hop neighborhood with n being a naturel number equal or greater than 2.

8. The apparatus of claim 6 or 7, further comprising:
means for performing a method according to one of claims 2 to 5.

9. A computer program comprising computer program code which when being executed on a computer enables said computer to carry out a method according to one of claims 1 to 5.

## Patentansprüche

1. Verfahren zur Erhöhung des Datendurchsatzes in einem Kommunikationsnetzwerk durch Netzwerkkodierung, wobei das Verfahren umfaßt:
Detektieren, ob Pakete zwischen zwei getrennten Knoten oder Sätzen von Knoten über zwei oder mehr unterschiedliche Wege in der n-Hop-Radius-Umgebung eines potentiellen Kodierungsknotens ausgetauscht werden;
Ermitteln, ob es einen alternativen bidirektionalen Weg oder eine Mehrzahl unidirektionaler Wege gibt, über die der potentielle Kodierungsknoten lineare Kombinationen der in entgegengesetzte Richtungen fließenden Pakete bilden kann, die durch die getrennten Knoten bzw. Sätze von Knoten ausgetauscht werden;
Ermitteln, ob der alternative bidirektionale Weg oder die Mehrzahl unidirektionaler Wege, auf die Netzwerkkodierung angewendet werden kann, eine Verbesserung gemäß einer bestimmten Metrik bieten;
wenn die Metrik eine Verbesserung durch Anwendung der Netzwerkkodierung anzeigt, Ändern der Wege, entlang derer Pakete zwischen den zwei getrennten Knoten bzw. Sätzen von Knoten ausgetauscht werden, derart, dass Netzwerkkodierung von dem möglichen Kodierungsknoten verwendet werden kann;
wobei
die Metrik eine Routingmetrik ist, die von dem zugrundeliegenden Routingprotokoll verwendet wird, wobei die Routingmetrik auf der Verbesserung der Übertragungskosten basiert, die durch Netzwerkkodierung erzielt werden kann, und wobei sie ferner auf der Verbindungsqualität zwischen den Knoten basiert; wobei das Verfahren ferner umfaßt:
Senden, durch jeden Knoten im Netzwerk, von Informationen bezüglich der Nachbarn in seiner n-1-Hop-Umgebung, und darüber hinaus einer Angabe über die jeweilige Qualität der Verbindungen zu seinen n-1-Hop-Nachbarn, um es einem möglichen Kodierungsknoten zu ermöglichen, eine Verbindungsstatus-Karte seiner n-Hop-Umgebungstopologie zu erzeugen und, basierend auf den detektierten Umgebungsbedingungen, sich selbst als Kandidatenknoten zur Netzwerkkodierung zu selektieren oder zu verwerfen;
Ankündigen einer Angabe der Verbindungskosten für einen neuen Weg, der Netzwerkkodierung verwendet, durch einen möglichen Kodierungsknoten, wobei die Verbindungskosten eine mögliche, durch Netzwerkkodierung erzielte Datendurchsatzverbesserung reflektieren;
Ermitteln, ob der neue Weg im Hinblick auf die Verbindungskosten den bislang zum Austauschen von Paketen zwischen den getrennten Sätzen von Knoten verwendeten Wegen vorzuziehen ist;
wenn der neue Weg vorzuziehen ist, Aktualisieren der Routingtabelleneinträge, um den neuen Weg für den Paketaustausch anzupassen.

2. Verfahren nach Anspruch 1, ferner umfassend:
Empfangen, durch einen möglichen Kodierungsknoten, von Informationen bezüglich der Topologie und der aktiven Wege in seiner n-Hop-Umgebung, wobei n eine natürliche Zahl gleich oder größer als 2 ist.

3. Verfahren nach einem der vorhergehenden Ansprüche, wobei
der Schritt des Ermittelns eines alternativen bidirektionalen Weges den Betrieb eines Quellroutingmechanismus umfaßt, um einen oder mehrere Wege zwischen den zwei getrennten Knoten bzw. Sätzen von Knoten zu ermitteln;
Wählen eines oder mehrerer Wege, die vom Quellroutingmechanismus detektiert wurden, um Netzwerkkodierung durch Knoten der Wege durchzuführen.

4. Verfahren nach Anspruch 3, ferner umfassend:
Ausbalancieren des Datenratenflusses in entgegengesetzten Richtungen entlang desselben Wegs.

5. Verfahren nach Anspruch 3 oder 4, ferner umfassend:
Aufspalten einer Datendatei, die zwischen den Knoten bzw. Sätzen von Knoten ausgetauscht werden soll, in mehrere Stücke, und Senden derselben über eine Mehrzahl von Wegen.

6. Vorrichtung zur Erhöhung des Datendurchsatzes in einem Kommunikationsnetzwerk durch Netzwerkkodierung, wobei die Vorrichtung umfaßt:
eine Einrichtung zum Detektieren, ob Pakete zwischen zwei getrennten Knoten oder Sätzen von Knoten über zwei oder mehr unterschiedliche Wege in der n-Hop-Radius-Umgebung eines potentiellen Kodierungsknotens ausgetauscht werden;
eine Einrichtung zum Ermitteln, ob es einen alternativen bidirektionalen Weg oder eine Mehrzahl unidirektionaler Wege gibt, über die der potentielle Kodierungsknoten lineare Kombinationen der in entgegengesetzte Richtungen fließenden Pakete bilden kann, die durch die getrennten Knoten bzw. Sätze von Knoten ausgetauscht werden;
eine Einrichtung zum Ermitteln, ob der alternative bidirektionale Weg oder die Mehrzahl unidirektionaler Wege, auf denen Netzwerkkodierung angewendet werden kann, eine Verbesserung gemäß einer bestimmten Metrik bieten;
eine Einrichtung zum Ändern der Wege, entlang derer Pakete zwischen den zwei getrennten Knoten bzw. Sätzen von Knoten ausgetauscht werden, derart, dass Netzwerkkodierung von dem möglichen Kodierungsknoten verwendet werden kann, wenn die Metrik eine Verbesserung durch Anwendung der Netzwerkkodierung anzeigt;
wobei
die Metrik eine Routingmetrik ist, die von dem zugrundeliegenden Routingprotokoll verwendet wird, wobei die Routingmetrik auf der Verbesserung der Übertragungskosten basiert, die durch Netzwerkkodierung erzielt werden kann, und wobei sie ferner auf der Verbindungsqualität zwischen den Knoten basiert; wobei die Vorrichtung ferner umfaßt:
eine Einrichtung zum Senden, durch jeden Knoten im Netzwerk, von Informationen bezüglich der Nachbarn in seiner n-1-Hop-Umgebung, und darüber hinaus einer Angabe über die jeweilige Qualität der Verbindungen zu seinen n-1-Hop-Nachbarn, um es einem möglichen Kodierungsknoten zu ermöglichen, eine Verbindungsstatus-Karte seiner n-Hop-Umgebungstopologie zu erzeugen und, basierend auf den detektierten Umgebungsbedingungen, sich selbst als Kandidatenknoten zur Netzwerkkodierung zu selektieren oder zu verwerfen;
eine Einrichtung zum Ankündigen einer Angabe der Verbindungskosten für einen neuen Weg, der Netzwerkkodierung verwendet, durch einen möglichen Kodierungsknoten, wobei die Verbindungskosten eine mögliche, durch Netzwerkkodierung erzielte Datendurchsatzverbesserung reflektieren;
eine Einrichtung zum Ermitteln, ob der neue Weg im Hinblick auf die Verbindungskosten den bislang zum Austauschen von Paketen zwischen den getrennten Sätzen von Knoten verwendeten Wegen vorzuziehen ist;
eine Einrichtung zum Aktualisieren der Routingtabelleneinträge, um den neuen Weg für den Paketaustausch anzupassen, wenn der neue Weg vorzuziehen ist.

7. Vorrichtung nach Anspruch 6, ferner umfassend:
eine Einrichtung zum Empfangen, durch einen möglichen Kodierungsknoten, von Informationen bezüglich der Topologie und der aktiven Wege in seiner n-Hop-Umgebung, wobei n eine natürliche Zahl gleich oder größer als 2 ist.

8. Vorrichtung nach Anspruch 6 oder 7, ferner umfassend:
eine Einrichtung zum Durchführen eines Verfahrens gemäß einem der Ansprüche 2 bis 5.

9. Computerprogramm, umfassend Computerprogrammcode, der, wenn er auf einem Computer ausgeführt wird, es dem Computer ermöglicht, ein Verfahren gemäß einem der Ansprüche 1 bis 5 auszuführen.

## Revendications

1. Procédé pour augmenter le débit dans un réseau de communication par un codage de réseau, ledit procédé consistant à :
détecter si des paquets sont échangés entre deux noeuds ou ensembles de noeuds déconnectés par l'intermédiaire de deux trajets différents ou plus dans le voisinage d'un rayon de saut n d'un noeud de codage potentiel ;
déterminer s'il existe un autre trajet bidirectionnel ou de multiples trajets unidirectionnels sur lesquels ledit noeud de codage potentiel peut effectuer des combinaisons linéaires des paquets circulant dans des directions opposées qui sont échangés par lesdits noeuds ou ensembles de noeuds déconnectés ;
déterminer si ledit autre trajet bidirectionnel ou lesdits multiples trajets unidirectionnels sur lesquels un codage de réseau peut être appliqué offrent un gain selon une certaine métrique ;
si ladite métrique indique un gain en appliquant un codage de réseau, changer les trajets le long desquels des paquets sont échangés entre lesdits deux noeuds ou ensembles de noeuds déconnectés de sorte qu'un codage de réseau par ledit noeud de codage possible puisse être utilisé ;
dans lequel
ladite métrique est une métrique d'acheminement utilisée par le protocole d'acheminement sous-jacent, ladite métrique d'acheminement étant basée sur le gain en coûts de transmission qui peut être obtenu par un codage de réseau et basée en outre sur la qualité de la liaison entre les noeuds ; ledit procédé consistant en outre à :
diffuser par chaque noeud dans ledit réseau des informations concernant les voisins dans son voisinage de saut n-1 et en outre une indication concernant la qualité respective des liaisons vers ses voisins de saut n-1 pour permettre à un noeud de codage possible de créer une carte d'états de liaison de sa topologie de voisinage de saut n et de se sélectionner ou de se rejeter en tant que noeud candidat pour un codage de réseau sur la base des conditions environnantes détectées ;
publier par un noeud de codage possible une indication du coût de liaison pour un nouveau trajet qui utilise un codage de réseau, ledit coût de liaison reflétant un gain de débit possible obtenu par un codage de réseau ;
déterminer si le nouveau trajet en termes de coût de liaison est préférable par rapport aux différents trajets utilisés jusqu'ici pour échanger des paquets entre ledit ensemble de noeuds déconnectés ;
si ledit nouveau trajet est préférable, mettre à jour les entrées de la table d'acheminement pour adapter ledit nouveau trajet pour ledit échange de paquets.

2. Procédé selon la revendication 1, consistant en outre à ;
recevoir par un noeud de codage possible des informations concernant la topologie et les trajets actifs dans son voisinage de saut n, n étant un nombre entier naturel égal ou supérieur à 2.

3. Procédé selon l'une des revendications précédentes, dans lequel
ladite étape de détermination d'un autre trajet bidirectionnel comprend l'exécution d'un mécanisme d'acheminement de source pour découvrir un ou plusieurs trajets entre les deux noeuds ou ensembles de noeuds déconnectés ;
choisir un ou plusieurs trajets détectés par ledit mécanisme d'acheminement de source pour effectuer un codage de réseau par les noeuds desdits trajets.

4. Procédé selon la revendication 3, consistant en outre à :
équilibrer le débit de données circulant dans des directions opposées le long du même trajet.

5. Procédé selon la revendication 3 ou 4, consistant en outre à :
diviser un fichier de données à échanger entre lesdits noeuds ou ensembles de noeuds en plusieurs éléments et les envoyer le long de multiples trajets.

6. Dispositif pour augmenter le débit dans un réseau de communication par un codage de réseau, ledit dispositif comprenant :
des moyens pour détecter si des paquets sont échangés entre deux noeuds ou ensembles de noeuds déconnectés par deux trajets différents ou plus dans le voisinage d'un rayon de saut n d'un noeud de codage potentiel ;
des moyens pour déterminer s'il existe un autre trajet bidirectionnel ou de multiples trajets unidirectionnels sur lesquels ledit noeud de codage potentiel peut effectuer des combinaisons linéaires des paquets circulant dans des directions opposées qui sont échangés par lesdits noeuds ou ensembles de noeuds déconnectés ;
des moyens pour déterminer si ledit autre trajet bidirectionnel ou lesdits multiples trajets unidirectionnels auxquels un codage de réseau peut être appliqué offrent un gain selon une certaine métrique ;
des moyens pour, si ladite métrique indique un gain en appliquant un codage de réseau, changer les trajets le long desquels des paquets sont échangés entre lesdits deux noeuds ou ensembles de noeuds déconnectés de sorte qu'un codage de réseau par ledit noeud de codage possible puisse être utilisé ;
dans lequel
ladite métrique est une métrique d'acheminement utilisée par le protocole d'acheminement sous-jacent, ladite métrique d'acheminement étant basée sur le gain en coûts de transmission qui peut être obtenu par un codage de réseau et basée en outre sur la qualité de la liaison entre les noeuds, ledit dispositif comprenant en outre ;
des moyens pour diffuser par chaque noeud dans ledit réseau des informations concernant les voisins dans son voisinage de saut n-1 et en outre une indication concernant la qualité respective des liaisons vers ses voisins de saut n-1 pour permettre à un noeud de codage possible de créer une carte d'états de liaison de sa topologie de voisinage de saut n et de se sélectionner ou de se rejeter en tant que noeud candidat pour un codage de réseau sur la base des conditions environnantes détectées ;
des moyens pour publier par un noeud de codage possible une indication du coût de liaison pour un nouveau trajet qui utilise un codage de réseau, ledit coût de liaison reflétant un gain de débit possible obtenu par le codage de réseau ;
des moyens pour déterminer si le nouveau trajet en termes de coût de liaison est préférable par rapport aux différents trajets utilisés jusqu'ici pour échanger des paquets entre ledit ensemble de noeuds déconnectés ;
des moyens, si ledit nouveau trajet est préférable, pour mettre à jour les entrées de la table d'acheminement pour adapter ledit nouveau trajet pour ledit échange de paquets.

7. Dispositif selon la revendication 6, comprenant en outre :
des moyens pour recevoir par un noeud de codage possible des informations concernant la topologie et les trajets actifs dans son voisinage de saut n, n étant un nombre entier naturel égal ou supérieur à 2.

8. Dispositif selon la revendication 6 ou 7, comprenant en outre :
des moyens pour effectuer un procédé selon l'une des revendications 2 à 5.

9. Programme d'ordinateur comprenant un code de programme d'ordinateur qui, lorsqu'il est exécuté sur un ordinateur, permet audit ordinateur d'effectuer un procédé selon l'une des revendications 1 à 5.
